# EUROPEAN PATENT APPLICATION

(11) **EP 3 197 176 A1**
(43) Date of publication of application: **26.07.2017**
(21) Application number: 16795218.3
(22) Date of filing: 11.07.2016
(51) Int. Cl.: H04N 21/482, H04N 21/438, H04N 21/431, H04N 21/435, H04N 21/443, H04N 21/472, H04N 21/81, H04N 21/8549, H04N 21/858, H04N 21/4143, H04N 21/414

(54) **ANDROID PLATFORM-BASED MULTIMEDIA RECOMMENDATION METHOD AND TERMINAL DEVICE**

(30) Priority: 11.12.2015 CN 201510921216
(71) Applicant: Le Holdings (Beijing) Co., Ltd., Beijing 100025 (CN); Le Shi Internet Information & Technology Corp., Beijing, Beijing 100025 (CN)
(72) Inventor: SHI, Xuehui, Beijing 100025 (CN)
(74) Representative: Fabiano, Piero
(86) International application number: PCT/CN2016/089705
(87) International publication number: WO 2017/096903

(57) **Abstract**

Embodiments of the present disclosure provide a method, a terminal device, and a server based on an Android platform for multimedia recommendation. The method includes: sending a multimedia recommendation request to a server; acquiring a multimedia recommendation page and at least one low-resolution multimedia resource in response to the multimedia recommendation request; and embedding the low-resolution multimedia resource in a corresponding preview position in the multimedia recommendation page. The embodiments of the present disclosureembed a corresponding low-resolution multimedia resource in a preview position in a recommendation page presented to a user, so as to recommend a multimedia resource to the user, and improve viewing experience of the user at the same time.

## Description

The present disclosure claims priority to Chinese Patent Application No. 201510921216.6, filed with the Chinese Patent Office on December 11, 2015, which is incorporated herein by reference in its entirety.

### TECHNICAL FIELD

This application relates to the field of computer technologies, and in particular, to a method, a terminal device, and a server based on an Android platform for multimedia recommendation.

### BACKGROUND

Nowadays, a video play application (for example, LeTV, iQIYI, or StormPlayer, etc.) is usually provided on a terminal device for an Android system. After clicking on the video play application, a user enters a video recommendation page. The video recommendation page mostly includes many video posters or static pages of highlights. If intending to watch a video, the user needs to click a static page of a video to enter a video play page to learn detailed video content in addition to the static page, therefore affecting viewing experience of the user.

### SUMMARY

The present disclosure is to provide a method and a terminal device based on an Android platform for multimedia recommendation, to improve viewing experience of a user.

According to an aspect of the present disclosure, a multimedia recommendation method based on an Android platform applied to a terminal device installed with an Android plat form is provided, where the method includes: sending a multimedia recommendation request to a server; acquiring a multimedia recommendation page and at least one low-resolution multimedia resource in response to the multimedia recommendation request; and embedding the low-resolution multimedia resource in a corresponding preview position in the multimedia recommendation page.

In an implementation manner, the acquiring a multimedia recommendation page and at least one low-resolution multimedia resource includes: receiving the multimedia recommendation page and an address of the low-resolution multimedia resource that are sent by the server, and downloading the corresponding low-resolution multimedia resource according to the address of the low-resolution multimedia resource.

In an implementation manner, a canvas is set in the preview position, and the canvas is used to display information of the multimedia resource, where the embedding the low-resolution multimedia resource in a corresponding preview position in the multimedia recommendation page includes: creating a play window corresponding to the preview position, where the play window is used to play the low-resolution multimedia resource.

In an implementation manner, the method further includes: displaying the multimedia recommendation page.

In an implementation manner, the displaying the multimedia recommendation page includes: acquiring information of a first preview position in a preset focus area in the multimedia recommendation page; removing a canvas in the first preview position according to the information of the first preview position; and calling a play window corresponding to the first preview position to start playing the low-resolution multimedia resource.

According to another aspect of the present disclosure, a multimedia recommendation method based on an Android platform applied to a server is provided, where the method includes: parsing a multimedia recommendation request, and acquiring information of a recommended multimedia resource and an address of a corresponding low-resolution multimedia resource;
generating a multimedia recommendation page according to the information of the recommended multimedia resource; and
sending the multimedia recommendation page and the address of the low-resolution multimedia resource to a terminal device.

According to another aspect of the present disclosure, a terminal device based on an Android platform is provided, where the terminal device includes: a multimedia recommendation request sending unit configured to send a multimedia recommendation request to a server; a multimedia content acquisition unit configured to acquire a multimedia recommendation page and at least one low-resolution multimedia resource in response to the multimedia recommendation request sent by the multimedia recommendation request sending unit; and a multimedia resource embedding unit configured to embed the low-resolution multimedia resource acquired by the multimedia content acquisition unit in a corresponding preview position in the multimedia recommendation page.

In an implementation manner, the multimedia content acquisition unit is further configured to receive the multimedia recommendation page and an address of the low-resolution multimedia resource that are sent by the server, and to download the corresponding low-resolution multimedia resource according to the address of the low-resolution multimedia resource.

In an implementation manner, a canvas is set in the preview position in the multimedia resource embedding unit, and the canvas is used to display information of the multimedia resource, where the multimedia resource embedding unit is further configured to create a play window corresponding to the preview position, and the play window is used to play the low-resolution multimedia resource.

In an implementation manner, the terminal device further includes: a multimedia recommendation page displaying unit configured to display the multimedia recommendation page acquired by the multimedia content acquisition unit.

In an implementation manner, the multimedia recommendation page displaying unit includes: a focus acquisition subunit configured to acquire information of a first preview position in a preset focus area in the multimedia recommendation page; a canvas processing subunit configured to remove a canvas in the first preview position according to the information of the first preview position; and a play subunit configured to call a play window corresponding to the first preview position to start playing the low-resolution multimedia resource.

According to another aspect of the present disclosure, a server based on an Android platform is provided, where the server includes: a parsing module configured to parse a multimedia recommendation request, and to acquire information of a recommended multimedia resource and an address of a corresponding low-resolution multimedia resource;
a multimedia recommendation page generation module configured to generate a multimedia recommendation page according to the information of the recommended multimedia resource; and
a sending module configured to send the multimedia recommendation page and the address of the low-resolution multimedia resource to a terminal device.

The method and the terminal device based on an Android platform for multimedia recommendation provided in the embodiments of the present disclosure, embedding a corresponding low-resolution multimedia resource in a preview position in a recommendation page presented to a user, so as to recommend a multimedia resource to the user, and improve viewing experience of the user at the same time.

### BRIEF DESCRIPTION OF THE DRAWINGS

Fig. 1 is a flowchart of a multimedia recommendation method based on an Android platform according to Embodiment 1 of the present disclosure;
Fig. 2 is a flowchart of a multimedia recommendation method based on an Android platform according to Embodiment 2 of the present disclosure;
Fig. 3 is a schematic structural diagram of a terminal device based on an Android platform according to Embodiment 3 of the present disclosure; and
Fig. 4 is a schematic structural diagram of a terminal device based on an Android platform according to Embodiment 4 of the present disclosure.

### DETAILED DESCRIPTION

Exemplary embodiments of the present disclosure are described in detail below with reference to the accompanying drawings.

### Embodiment 1

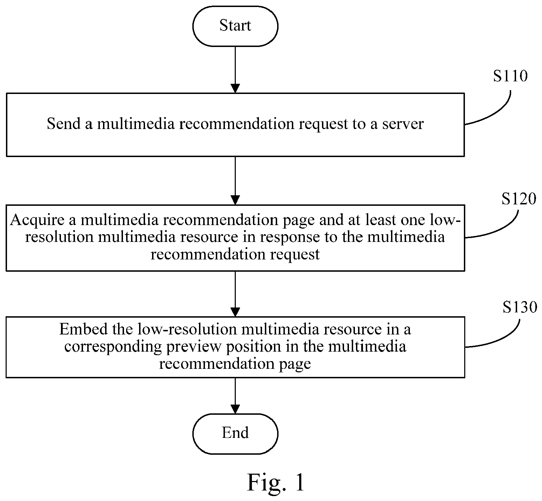

Fig. 1 is a flowchart showing a multimedia recommendation method based on an Android platform according to Embodiment 1 of the present disclosure.

Referring to Fig. 1, the multimedia recommendation method based on an Android platform includes the following steps:
in Step S110: sending a multimedia recommendation request to a server.

Specifically, an execution body of the method is a terminal device provided with an Android system, which includes, but is not limited to, a mobile phone, a tablet, or a smart TV, etc. Optionally, the server may be a video server, and is used to provide multimedia resources, multimedia resource information, and the like to the terminal device. In this embodiment, optionally, the multimedia resources are videos.

In this embodiment, after a user enters a video APP application by using a mobile phone or a tablet, the application program proactively sends a video recommendation request to the server. Optionally, these videos may be classified according to different types as films, TV series, anime, games, or the like.

Step S120: Acquire a multimedia recommendation page and at least one low-resolution multimedia resource in response to the multimedia recommendation request.

In this embodiment, a method for the terminal device to acquire a multimedia recommendation page and at least one low-resolution multimedia resource may include, but is not limited to:
In an embodiment, the server parses the multimedia recommendation request, and acquires information of a recommended multimedia resource and an address of a corresponding low-resolution multimedia resource. The server may be a video server. The server receives the multimedia recommendation request; searches locally, according to the multimedia recommendation request, information of a corresponding recommended multimedia resource and an address of a low-resolution multimedia resource corresponding to the information of the recommended multimedia resource.For example, the information of the recommended multimedia resource may be a poster for Nirvana in Fire, a poster for Legend of Miyue, and/or a poster for Dragon Ball, etc., and then the address of the corresponding low-resolution multimedia resource is searched according to the information of the recommended multimedia resource, for example, a download address of a low-resolution multimedia resource corresponding to Nirvana in Fire: http://www.12356.com, etc.

The server generates a multimedia recommendation page according to the information of the recommended multimedia resource. The server allows the information of the recommended multimedia resource and corresponding position information in the presentation page of the information of the recommended multimedia resource to be carried in the multimedia recommendation page.

The server sends the multimedia recommendation page and the address of the low-resolution multimedia resource to the terminal device.

The terminal device downloads the corresponding low-resolution multimedia resource according to the address of the low-resolution multimedia resource. The terminal device creates a thread and calls the thread to download the corresponding low-resolution multimedia resource according to the address of the low-resolution multimedia resource.

Specifically, in this embodiment, the multimedia recommendation page may include, but is not limited to, posters or presentation pages for highlights of videos in a video library provided by the video application to the user, where a video is usually presented in a form of a picture or a text. For example, the video recommendation page includes numerous video pictures, where a directory of TV series includes, for example, Nirvana in Fire, Legend of Zhen Huan, or Romance of the Three Kingdoms, etc.; a directory of anime includes Naruto, Bleach, Fist of the North Star, or One Piece, etc.; and a directory ofgame includes Dungeon & Fighter, League of Legends, or Cross Fire, etc.

Specifically, each video provider has a different definition for low resolution, and a resolution is relevant to mobile phone performance and a network speed. Therefore, only a range is given in this embodiment. For example, a resolution of a low-resolution multimedia resource falls within the following range: (480 ± N) pixels * (240 ± M) pixels, where N is not less than 0 and not greater than 100 and M is not less than 0 and not greater than 100.

In an implementation manner, the low-resolution video content information may be a video in the foregoing video recommendation page, and also may be a video other than the videos included in the page.

Optionally, the terminal device may also synchronously acquire content information of multiple low-resolution videos, for example, content information of low-resolution videos of Nirvana in Fire, One Piece, and Dungeon & Fighter.

Step S130: Embed the low-resolution multimedia resource in a corresponding preview position in the multimedia recommendation page.

The terminal device sets a canvas in a preview position. The canvas is used to display information of the multimedia resource, for example, displaying a poster for a recommended multimedia resource and the like in a corresponding preview position in the multimedia recommendation page.

In addition, the terminal device creates a play window corresponding to the preview position. The play window is used to start playing the low-resolution multimedia resource after the canvas in the corresponding preview position is removed.

Specifically, the foregoing preview position may be a position in the upper left corner, the lower left corner, the upper right corner, the lower right corner, or the middle of the video recommendation page. After a mobile phone receives the video recommendation page and the content information of at least one low-resolution video from the server, the mobile phone will embed the low-resolution video content in the foregoing preview position.

Preferably, an area in the preview position cannot be so large as to affect a user to view other video recommendation information, nor can the area be so small that the low-resolution video is more blurred and unclear to see. Preferably, the specific location and size of the preview position may also be set according to difference ofa mobile phone or a tablet.

The multimedia recommendation method based on an Android platform provided in this embodiment of the present disclosure, embeds a corresponding low-resolution multimedia resource in a preview position in a recommendation page presented to a user, so as to recommend a multimedia resource to the user, and improve viewing experience of the user at the same time.

### Embodiment 2

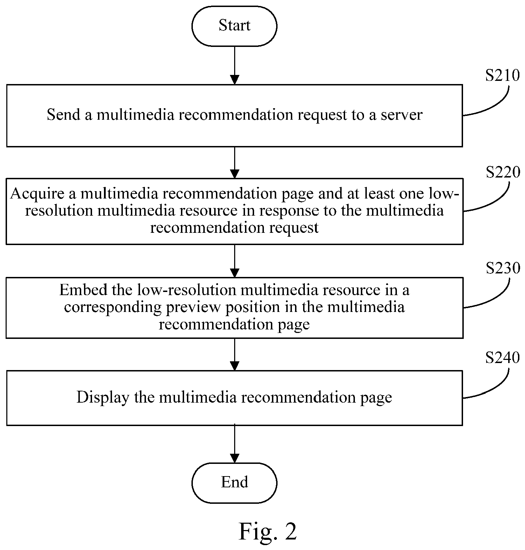

Fig. 2 is a flowchart showing a multimedia recommendation method based on an Android platform according to Embodiment 2 of the present disclosure.

Referring to Fig. 2, the multimedia recommendation method based on an Android platform includes the following steps:
Step S210: sending a multimedia recommendation request to a server.
Step S220: Acquire a multimedia recommendation page and at least one low-resolution multimedia resource in response to the multimedia recommendation request.
Step S230: Embed the low-resolution multimedia resource in a corresponding preview position in the multimedia recommendation page.

Contents of step S210, step S220, and step S230 respectively correspond to those of step S110, step S120, and step S130 of the forgoing Embodiment 1, and their functions and principles are the same, which are not described herein again.

Based on the foregoing steps, the multimedia recommendation method based on an Android platform in this embodiment further includes step S240 and step S250.

Step S240: Display the multimedia recommendation page.

When the user drags the multimedia recommendation page so that some preview positions are in a focus area, the terminal device acquires information of a first preview position in a preset focus area in the multimedia recommendation page. The information of the first preview position may include, but is not limited to, coordinates of the first preview position, and the like.

A canvas in the first preview position is removed according to the information of the first preview position.

A play window corresponding to the first preview position is called to start playing the low-resolution multimedia resource. After the canvas in the first preview position is removed, the terminal device starts playing, by the created play window, a decoded part of the low-resolution multimedia resource corresponding to the first preview position. When there are multiple first preview positions, multiple canvases may be removed at the same time, and the corresponding low-resolution multimedia resources are started playing at the same time by different play windows respectively.

Specifically, after receiving the video recommendation page and the at least one low-resolution video resource from the server, the terminal device displays the video recommendation page, where the page includes the foregoing low-resolution video resource. Preferably, multiple video clips may be displayed at the same time on the video recommendation page, for example, a clip of Three Visits to the Hutby Liubei, a clip of Wu Song Fights the Tiger, or a clip of Sun Wukong Fights Red Boy. Preferably, a video clip may be selectively displayed on the video recommendation page according to scrolling of a scroll wheel of a mouse by a user. For example, when the user starts entering the page, a video clip of Romance of the Three Kingdoms is displayed, and when the mouse is scrolled to a next position, a video clip of Water Margin is displayed on the page. Preferably, a corresponding video may also be displayed on the video recommendation page according to a poster or a video frame of a highlight touched by a mouse of the user. For example, when the mouse touches a poster for One Piece, a video clip of One Piece is displayed on the page, and when the mouse touches a poster for Naruto, a video clip of Naruto is displayed on the page.

Specifically, the preset focus area is in a central position of a screen of the terminal device.

For example, after a user accesses video application software LeTV by using a mobile phone, a video recommendation page displayed by the software is provided with a video play function. Assuming that the video recommendation page includes posters for Nirvana in Fire and One Piece, a low-resolution highlight of an episode of Nirvana in Fire and/or One Piece is played in a central position of the mobile phone on the video recommendation page. If the user dislikes Nirvana in Fire, the user does not need to enter a video play page of Nirvana in Fire to learn about it, which avoids unnecessary operations of the user, improves experience, and reduces traffic at the same time.

Preferably, the low-resolution multimedia resource is a clip of a corresponding multimedia resource or a trailer of the corresponding multimedia resource, where the trailer includes a highlight, an opening, or an ending. For example, a low-resolution video clip or video trailer of Romance of the Three Kingdoms may be a clip of Oath of Brotherhood in the Peach Garden, a clip of Three Heros Fight Lv Buat Hu Lao Gate, an opening video with the song Rolling Yangtze River Flows East, an ending video with the song The Sky in the History, or the like.

The multimedia recommendation method based on an Android platform provided in this embodiment of the present disclosure, plays a corresponding low-resolution multimedia resource in a preview position in a recommendation page presented to a user, and before selecting a to-be-played resource, the user may learn video content better by the previewed low-resolution multimedia resource, to select more intuitively the to-be-played resource, which makes operations of the user more simple and convenient and improves user experience.

### Embodiment 3

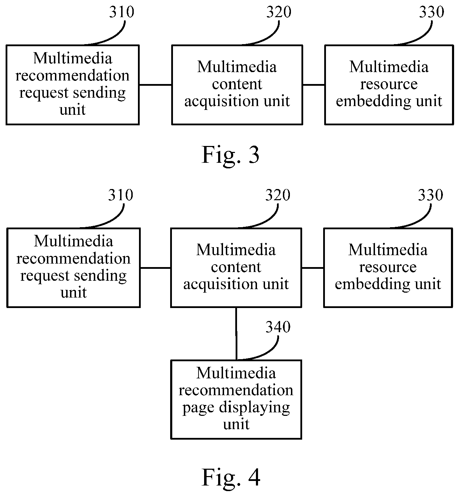

Fig. 3 is a schematic structural diagram showing a terminal device based on an Android platform according to Embodiment 3 of the present disclosure.

Referring to Fig. 3, the terminal device based on an Android platform in this embodiment is used to execute the steps in the method in Fig. 1, and the apparatus includes: a multimedia recommendation request sending unit 310, a multimedia content acquisition unit 320, and a multimedia resource embedding unit 330.

The multimedia recommendation request sending unit 310 sends a multimedia recommendation request to a server.

The multimedia content acquisition unit 320 acquires a multimedia recommendation page and at least one low-resolution multimedia resource in response to the multimedia recommendation request sent by the multimedia recommendation request sending unit 310.

In an embodiment, the server parses the multimedia recommendation request, and acquires information of a recommended multimedia resource and an address of a corresponding low-resolution multimedia resource. The server generates a multimedia recommendation page according to the information of the recommended multimedia resource. The server sends the multimedia recommendation page and the address of the low-resolution multimedia resource to the terminal device. The multimedia content acquisition unit is further configured to download the corresponding low-resolution multimedia resource according to the address of the low-resolution multimedia resource.

The multimedia resource embedding unit 330 embeds the low-resolution multimedia resource, acquired by the multimedia content acquisition unit 320, in a corresponding preview position in the multimedia recommendation page.

Optionally, a canvas is set in the preview position, and the canvas is used to display information of the multimedia resource, where the multimedia resource embedding unit is further configured to create a play window corresponding to the preview position, and the play window is used to play the low-resolution multimedia resource.

The terminal device based on an Android platform provided in this embodiment of the present disclosure, embeds a corresponding low-resolution multimedia resource in a preview position in a recommendation page presented to a user, so as to recommend a multimedia resource to the user, and improve viewing experience of the user at the same time.

### Embodiment 4

Fig. 4 is a schematic structural diagram showing a terminal device based on an Android platform according to Embodiment 4 of the present disclosure.

Referring to Fig. 4, the terminal device based on an Android platform in this embodiment is used to execute the steps in the method in Fig. 2, and the apparatus includes: a multimedia recommendation request sending unit 310, a multimedia content acquisition unit 320, a multimedia resource embedding unit 330, a multimedia recommendation page displaying unit 340, and a multimedia resource playing unit 350.

The multimedia recommendation request sending unit 310 sends a multimedia recommendation request to a server.

The multimedia content acquisition unit 320 acquires a multimedia recommendation page and at least one low-resolution multimedia resource in response to the multimedia recommendation request sent by the multimedia recommendation request sending unit 310.

The multimedia resource embedding unit 330 embeds the low-resolution multimedia resource, acquired by the multimedia content acquisition unit 320, in a corresponding preview position in the multimedia recommendation page.

The multimedia recommendation page displaying unit 340 displays the multimedia recommendation page acquired by the multimedia content acquisition unit 320.

In an implementation manner, the multimedia recommendation page displaying unit includes:
a focus acquisition subunit (not shown in the figure), which acquires information of a first preview position in a preset focus area in the multimedia recommendation page.

A canvas processing subunit (not shown in the figure), which removes a canvas in the first preview position according to the information of the first preview position.

A play subunit (not shown in the figure), which calls a play window corresponding to the first preview position to start playing the low-resolution multimedia resource.

Preferably, the low-resolution multimedia resource is a clip of a corresponding multimedia resource or a trailer of the corresponding multimedia resource.

The terminal device based on an Android platform provided in this embodiment of the present disclosure, plays a corresponding low-resolution multimedia resource in a preview position in a recommendation page presented to a user, and before selecting a to-be-played resource, the user may learn video content better by the previewed low-resolution multimedia resource, to select more intuitively the to-be-played resource, which makes operations of the user more simple and convenient and improves user experience.

It is to be noted that, according to requirements of implementation, various step/component described in this application may be divided into more steps/components, and two or more steps/components or some operations of step/component may also be combined into a new step/component to implement the objective of the present disclosure.

The foregoing method according to the present disclosure may be implemented in hardware or firmware, or may be implemented as software or computer code that may be stored in a recording medium (such as a CD ROM, a RAM, a floppy disk, a hard disk, or a magneto-optical disk), or may be implemented as computer code downloaded from a network that is originally stored in a remote recording medium or non-transitory machine readable medium and to be stored in a local recording medium. Therefore, the method described herein may be processed by such software stored in a recording medium that uses a general-purpose computer, a special-purpose processor, or programmable or special-purpose hardware (such as an ASIC or an FPGA). It can be understood that, a computer, a processor, a microprocessor controller, or programmable hardware includes a storage component (for example, a RAM, a ROM, or a flash disk, etc.) that can store or receive software or computer code. When the software or computer code is accessed and executed by the computer, the processor, or the hardware, the processing method described herein is implemented. In addition, when the general computer accesses the code for implementing processing described herein, execution of the code converts the general-purpose computer into a special-purpose computer for performing the processing described herein.

The foregoing descriptions are merely specific implementation manners of the present disclosure, but the protection scope of the present disclosure is not limited thereto. Any variations or alternatives that can be easily contemplated by a person skilled in the art within the technical scope disclosed in the present disclosure shall fall within the protection scope of the present disclosure. Therefore, the protection scope of the present disclosure should be subject to the protection scope of the claims.

## Claims

1. A multimedia recommendation method based on an Android platform, applied to a terminal device installed with an Android platform, wherein the method comprises:
sending a multimedia recommendation request to a server;
acquiring a multimedia recommendation page and at least one low-resolution multimedia resource in response to the multimedia recommendation request; and
embedding the low-resolution multimedia resource in a corresponding preview position in the multimedia recommendation page.

2. The method according to claim 1, wherein the acquiring a multimedia recommendation page and at least one low-resolution multimedia resource comprises:
receiving the multimedia recommendation page and an address of the low-resolution multimedia resource that are sent by the server, and downloading the corresponding low-resolution multimedia resource according to the address of the low-resolution multimedia resource.

3. The method according to claim 1, wherein a canvas is set in the preview position, and the canvas is used to display information of the multimedia resource, wherein the embedding the low-resolution multimedia resource in a corresponding preview position in the multimedia recommendation page comprises:
creating a play window corresponding to the preview position, wherein the play window is used to play the low-resolution multimedia resource.

4. The method according to claim 3, wherein the method further comprises:
displaying the multimedia recommendation page.

5. The method according to claim 4, wherein the displaying the multimedia recommendation page comprises:
acquiring information of a first preview position in a preset focus area in the multimedia recommendation page;
removing the canvas in the first preview position according to the information of the first preview position; and
calling a play window corresponding to the first preview position to start playing the low-resolution multimedia resource.

6. A multimedia recommendation method based on an Android platform, applied to a server, comprising:
parsing a multimedia recommendation request, and acquiring information of a recommended multimedia resource and an address of a corresponding low-resolution multimedia resource;
generating a multimedia recommendation page according to the information of the recommended multimedia resource; and
sending the multimedia recommendation page and the address of the low-resolution multimedia resource to a terminal device.

7. A terminal device based on an Android platform, wherein the terminal device comprises:
a multimedia recommendation request sending unit configured to send a multimedia recommendation request to a server;
a multimedia content acquisition unit configured to acquire a multimedia recommendation page and at least one low-resolution multimedia resource in response to the multimedia recommendation request sent by the multimedia recommendation request sending unit; and
a multimedia resource embedding unit configured to embed the low-resolution multimedia resource acquired by the multimedia content acquisition unit in a corresponding preview position in the multimedia recommendation page.

8. The terminal device according to claim 6, wherein the multimedia content acquisition unit is further configured to: receive the multimedia recommendation page and an address of the low-resolution multimedia resource that are sent by the server, and to download the corresponding low-resolution multimedia resource according to the address of the low-resolution multimedia resource.

9. The terminal device according to claim 6, wherein a canvas is set in the preview position in the multimedia resource embedding unit, and the canvas is used to display information of the multimedia resource, wherein
the multimedia resource embedding unit is further configured to create a play window corresponding to the preview position, and the play window is used to play the low-resolution multimedia resource.

10. The terminal device according to claim 9, wherein the terminal device further comprises:
a multimedia recommendation page displaying unit configured to display the multimedia recommendation page acquired by the multimedia content acquisition unit.

11. The terminal device according to claim 10, wherein the multimedia recommendation page displaying unit comprises:
a focus acquisition subunit configured to acquire information of a first preview position in a preset focus area in the multimedia recommendation page;
a canvas processing subunit configured to remove a canvas in the first preview position according to the information of the first preview position; and
a playing subunit configured to call a play window corresponding to the first preview position to start playing the low-resolution multimedia resource.

12. A server based on an Android platform, wherein the server comprises:
a parsing module configured to parse a multimedia recommendation request, and to acquire information of a recommended multimedia resource and an address of a corresponding low-resolution multimedia resource;
a multimedia recommendation page generation module configured to generate a multimedia recommendation page according to the information of the recommended multimedia resource; and
a sending module configured to send the multimedia recommendation page and the address of the low-resolution multimedia resource to a terminal device.
